# EUROPEAN PATENT SPECIFICATION

(11) **EP 2 100 527 B1**
(45) Date of publication and mention of the grant of the patent: **15.09.2010**
(21) Application number: 08102465.5
(22) Date of filing: 10.03.2008
(51) Int. Cl.: A41D 13/015, A42B 3/12

(54) **Resilient shock-absorbing device**
Elastisches schlagfestes Gerät
Dispositif d'absorption souple des chocs

(43) Date of publication of application: 16.09.2009
(73) Proprietor: Lin, Keng-Hsien, Hsiao-Kang Dist., Kaohsiung City (TW)
(72) Inventor: Lin, Keng-Hsien, Hsiao-Kang Dist., Kaohsiung City (TW)
(74) Representative: Texier, Christian

(56) References cited:
- EP-A- 0 047 712
- WO-A-99/49745
- DE-A1- 19 520 374
- US-A- 3 829 900
- US-A- 5 297 293

## Description

This invention relates to a shock-absorbing device that can be applied to various fields.

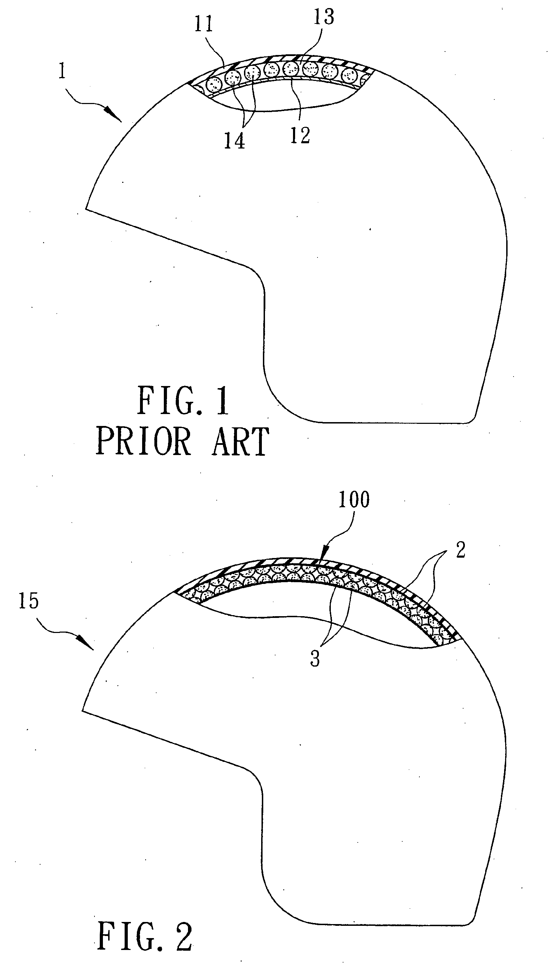

Referring to Fig. 1, a conventional safety helmet 1 includes an outer protective layer 11, an inner protective layer 12, a hollow intermediate layer 13 formed between the inner and outer protective layers 12, 11, and a plurality of buffering strips 14 filled in the intermediate layer 13. The buffering strips 14 are generally made of foam or Styrofoam, and are fixed within the intermediate layer 13 through an adhesive. Air is then introduced into the intermediate layer 13, so that through the buffering strips 14 and the air in the intermediate layer 13, the safety helmet 1 can absorb shocks generated upon impact with external forces. However, when the safety helmet 1 is subjected to an excessive external impact, the buffering strips 14 offer minimal protection due to the fact that they are made of foam or Styrofoam. In addition, the air introduced into the intermediate layer 13 may leak therefrom. Thus, after the outer protective layer 11 receives an external impact, the impact force is easily transmitted to the inner protective layer 12 of the safety helmet 1, so that the user's head, particularly portions thereof that are in contact with the inner protective layer 12, is likely to be jarred or injured. Further, since the inner protective layer 12 is usually made offabricmaterial, when the user perspires, e. g. , as a result of intense exercise, the user's sweat easily permeates into the buffering strips 14 through the inner protective layer 12, so that the safety helmet 1 produces a peculiar odor that is difficult to remove.

WO991 49745 discloses a resilient shock absorbing helmet comprising an inner and an outer shell, between which are arranged first and second layers of shock absorbing material in the form of cylindrical cork elements.

Therefore, the object of the present invention is to provide a resilient shock-absorbing device that is made from thermoplastic polyurethane and that can effectively buffer an external force so as to provide enhanced comfort and a good shock-absorbing effect.

According to this invention, a resilient shock-absorbing device comprises an absorber body having top and bottom faces and including first and second absorber layers. The first absorber layer includes a plurality of juxtaposed resilient first outer tube halves heat-sealed to each other, and a plurality of first foam members filled respectively in the first outer tube halves and each having a surface exposed from a respective one of the first outer tube halves. The first absorber layer forms the top face. The second absorber layer includes a plurality of juxtaposed resilient second outer tube halves heat-sealed to each other, and a plurality of second foam members filled respectively in the second outer tube halves and each having a surface exposed from a respective one of the second outer tube halves. The second absorber layer forms the bottom face. Each of the first and second outer tube halves is made of a thermoplastic elastic material. Each of the first and second foam members has a segment-shaped cross section.

Other features and advantages of the present invention will become apparent in the following detailed description of the preferred embodiments of the invention, with reference to the accompanying drawings, in which:
Fig. 1 is a schematic view of a conventional safety helmet, with a portion thereof removed for clarity's sake;
Fig. 2 is a schematic view of a safety helmet incorporating a resilient shock-absorbing device according to the first preferred embodiment of the present invention, with a portion of the safety helmet removed for clarity's sake;
Fig. 3 is a perspective view of a protective suit incorporating the resilient shock-absorbing device of the first preferred embodiment, with a portion of the protective suit removed for clarity's sake;
Fig. 4 is a perspective view of the first preferred embodiment;
Fig. 5 is a perspective view of an alternative form of the first preferred embodiment;
Fig. 6 is a perspective view of a resilient shock-absorbing device according to the second preferred embodiment of the present invention;
Fig. 7 is a perspective view of a resilient shock-absorbing device according to the third preferred embodiment of the present invention;
Fig. 8 is a perspective view of a resilient shock-absorbing device according to the fourth preferred embodiment of the present invention;
Fig. 9 is a perspective view of a resilient shock-absorbing device according to the fifth preferred embodiment of the present invention;
Fig. 10 is a perspective view of a resilient shock-absorbing device according to the sixth preferred embodiment of the present invention; and
Fig. 11 is a perspective view of a resilient shock-absorbing device according to the seventh preferred embodiment of the present invention.

Before the present invention is described in greater detail, it should be noted that the same reference numerals have been used to denote like elements throughout the specification.

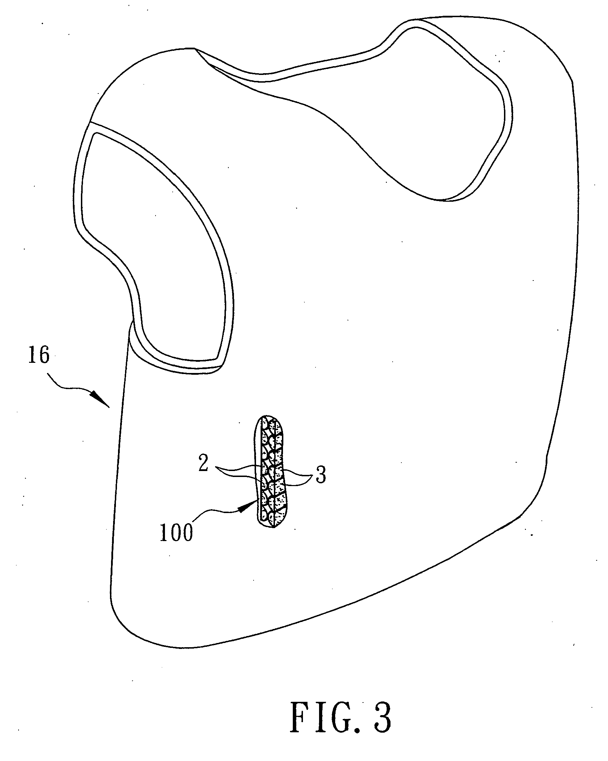

A resilient shock-absorbing device according to the first preferred embodiment of the present invention is adapted to be incorporated in a shell body of a safety helmet 15, as shown in Fig. 2, or in a protective suit 16, as shown in Fig. 3, to provide the safety helmet 15 or the protective suit 16 with good buffering and shock-absorbing effects. Hence, the resilient shock-absorbing device of the present invention may be applied to various fields, and the present invention is not limited to the disclosed application.

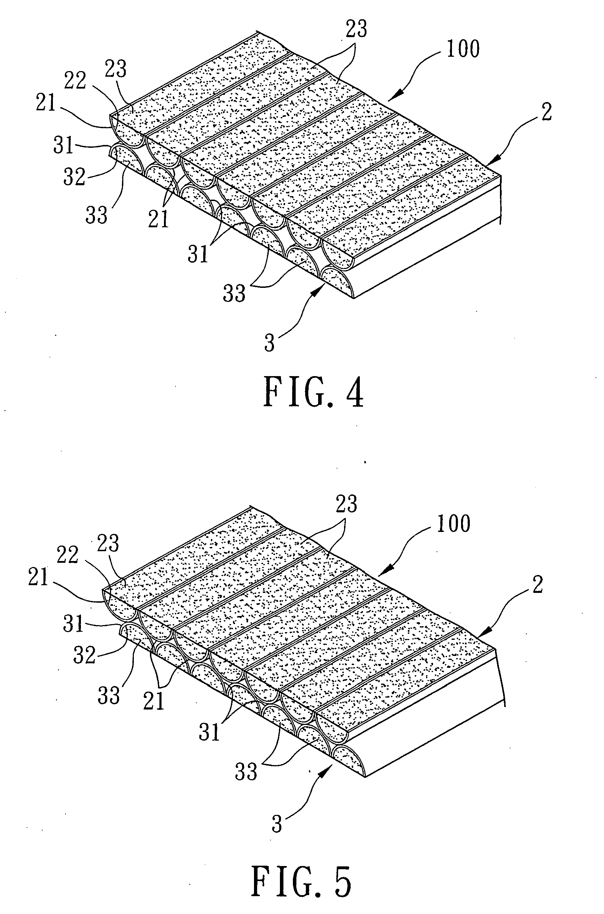

Referring to Fig. 4, the first preferred embodiment of the resilient shock-absorbing device of the present invention is shown to comprise an absorber body 100 having top and bottom faces and including first and second absorber layers 2, 3. The first absorber layer 2 includes a plurality of juxtaposed resilient first outer tube halves 21 heat-sealed to each other and each defining a receiving space 22, and a plurality of first foam members 23 filled respectively in the receiving spaces 22 of the first outer tube halves 21 and each having a surface exposed from a respective first outer tube half 21. The surfaces of the first foam members 23 form the top face of the absorber body 100.

The second absorber layer 3 is similar in construction to the first absorber layer 2. Particularly, the second absorber layer 3 includes a plurality of juxtaposed resilient second outer tube halves 31 heat-sealed to each other and each defining a receiving space 32, and a plurality of second foam members 33 disposed respectively in the receiving spaces 32 of the second outer tube halves 31 and each having a surface exposed from a respective second outer tube half 31. The surfaces of the second foam members 33 form the bottom face of the absorber body 100.

In this embodiment, each of the first outer tube halves 21 is heat-sealed to and is aligned with an adjacent one of the second outer tube halves 31 in a top-to-bottom direction. Alternatively, each of the first outer tube halves 21 may be heat-sealed to and may be staggered with respect to an adjacent one of the second outer tube halves 31 in a top-to-bottom direction, as shown in Fig. 5. Each of the first and second outer tube halves 21, 31 is made of a thermoplastic elastic material, and has a hardness ranging from 55 ShoreA to 85 ShoreD. The thermoplastic elastic material is thermoplastic polyurethane.

The term "tube half" used herein refers to a section of a tube which is formed by sectioning the tube along a plane extending axially of the tube and whose cross section has the shape of a segment of a circle or a semi-circle. In this embodiment, the cross section of each of the first and second outer tube halves 21, 31 is semi-circular. Each of the first foam members 23 does not project out of the semi-circular outline of the respective first outer tube half 21. However, in actual practice, each first foam member 23 may project out of the semi-circular outline of the respective first outer tube half 21.

Each of the first and second foam members 23, 33 is made of thermoplastic polyurethane, and has a density ranging from 0.2 g/cm³ to 0.6 g/cm³. However, in actual practice, each of the first and second foam members 23 may be made of a soft material selected from the group consisting of thermoplastic elastomer (TPE), polyurethane (PU), natural rubber, silicone rubber, and a combination thereof.

Since the first outer tube halves 21 of the first absorber layer 2 and the second outer tube halves 31 of the second absorber layer 3 are made of the same material, they can be tightly bonded to each other dispensing with the need of an adhesive, and are therefore not easily separated. Further, because the first and second absorber layers 2, 3 are parallel and are connected to each other through the first and second outer tube halves 21, 31, when the absorber body 100 is subjected to an external pressing force, the first and second outer tube halves 21, 31 will bend and deform according to the strength and direction of the applied pressure so as to provide good buffering and shock-absorbing effects. Moreover, through the presence of the first and second foam members 23, 33 in the respective first and second outer tube halves 21, 31, when an external force is greater than the supporting forces of the first and second outer tube halves 21, 31, the first and second foam members 23, 33 can provide an additional supporting force against the external force, thereby enhancing the shock-absorbing and buffering effects of the absorber body 100 of the resilient shock-absorbing device of the present invention.

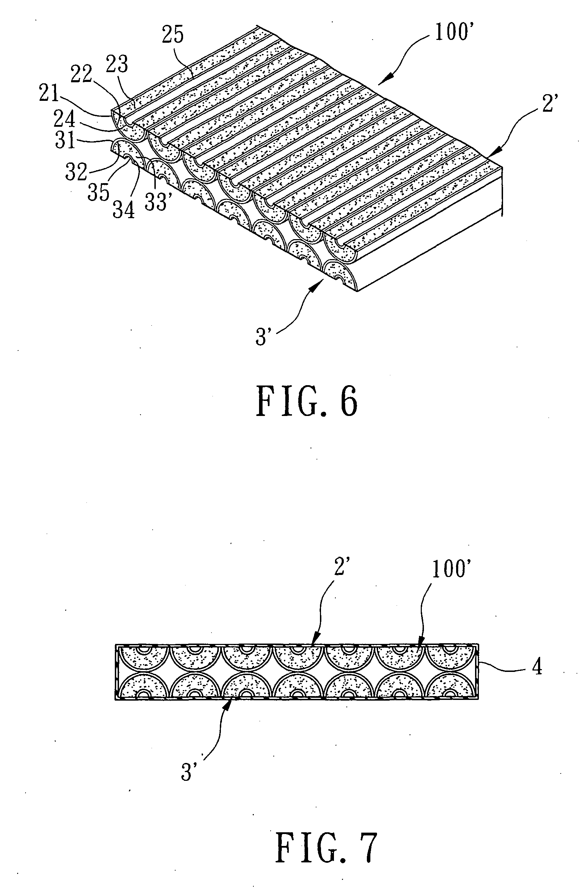

Referring to Fig. 6, a resilient shock-absorbing device according to the second preferred embodiment of the present invention is shown to be similar to the first preferred embodiment. However, in this embodiment, the surface of each of the first foam members 23' is formed with a first indentation 24 of semi-circular cross section that extends along the length thereof, and the surface of each of the second foam members 33' is formed with a second indentation 34 of semi-circular cross section that extends along the length thereof. The first absorber layer 2' further includes a plurality of first inner tube halves 25 disposed in the first indentations 24 of the respective first foam members 23' and each having a semi-circular cross section. The second absorber layer 3' further includes a plurality of second inner tube halves 35 disposed in the second indentations 34 of the respective second foam members 33' and each having a semi-circular cross section. Each of the first and second inner tube halves 25, 35 is made of thermoplastic polyurethane, and has a hardness ranging from 55 ShoreA to 85 ShoreD.

Through the presence of the relatively tough first and second inner tube halves 25, 35 in the respective first and second indentations 24, 34 of the first and second foam members 23', 33', the supporting effect of the entire absorber body 100' of the shock-absorbing device of the present invention is strengthened. When an external force is greater than the limiting supporting forces of the first and second outer tube halves 21, 31 and the first and second foammembers 23', 33', the first and second inner tube halves 25, 35 can provide an additional supporting force against the external force, thereby enhancing the supporting effect of the absorber body 100' of the shock-absorbing device of the present invention.

Referring to Fig. 7, a resilient shock-absorbing device according to the third preferred embodiment of the present invention is shown to be similar to the second preferred embodiment. However, in this embodiment, the shock-absorbing device of the present invention further comprises a cover layer 4 that envelops the superimposed first and second absorber layers 2', 3' of the absorber body 100'. The cover layer 4 is made of thermoplastic polyurethane, and has a hardness ranging from 55 ShoreA to 85 ShoreD.

Through the presence of the cover layer 4, the entire structure of the resilient shock-absorbing device of the present invention is strengthened, so that not only can each of the first and second absorber layers 2', 3' be prevented from being excessively pressed, but also the stability and durability of the same can be enhanced. Further, the cover layer 4 is a waterproof breathable (water-liquid impermeable and liquid-vapor permeable) film, so that when the user perspires after intense exercise, sweat is prevented from seeping easily into the absorber body 100' of the shock-absorbing device of the present invention. Moreover, the resilient shock-absorbing device of the present invention can be easily cleaned through its waterproof feature. Hence, the resilient shock-absorbing device of the present invention is suitable for use in the protective suit 16 of an athlete, and is very suitable for use in products that require higher supporting and shock-absorbing effects.

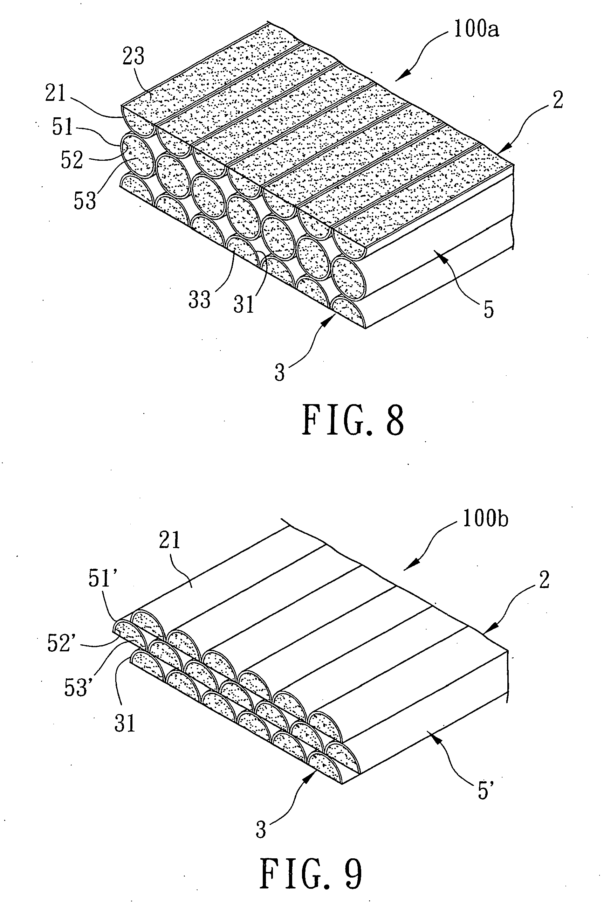

Referring to Fig. 8, a resilient shock-absorbing device according to the fourth preferred embodiment of the present invention is shown to be similar to the first preferred embodiment. However, in this embodiment, the absorber body (100a) further includes a third absorber layer 5 connected between the first and second absorber layers 2, 3. The third absorber layer 5 includes a plurality of juxtaposed resilient third outer tubes 51 heat-sealed to each other and each defining a receiving space 52, and a plurality of third foam members 53 received respectively in the receiving spaces 52 of the third outer tubes 51. Each of the third outer tubes 51 is made of thermoplastic polyurethane, and has a hardness ranging from 55 ShoreA to 85 ShoreD. Each of the third foam members 53 is also made of thermoplastic polyurethane, and has a density ranging from 0.2 g/cm³ to 0.6 g/cm³. However, in actual practice, each of the third foam members 53 may be made of a soft material selected from the group consisting of thermoplastic elastomer (TPE), polyurethane (PU), natural rubber, silicone rubber, and a combination thereof.

Each of the third outer tubes 51 is heat-sealed to and aligned with an adjacent one of the first outer tube halves 21 and an adjacent one of the second outer tube halves 31 in a top-to-bottom direction. However, the arrangement of the first and second outer tube halves 21, 31 and the third outer tubes 51 may be altered as desired.

Since the third outer tubes 51 are made of thermoplastic polyurethane and are connected between the respective first and second outer tube halves 21, 31, when an external force is greater than the limiting supporting forces of the first and second outer tube halves 21, 31 and the first and second foam members 23, 33, the third outer tubes 51 can provide an additional supporting force against the external force, thereby enhancing the buffering and shock-absorbing effects of the resilient shock-absorbing device of the present invention.

Referring to Fig. 9, a resilient shock-absorbing device according to the fifth preferred embodiment of the present invention is shown to be similar to the fourth preferred embodiment. However, in this embodiment, the third absorber layer 5' of the absorber body (100b) includes a plurality of juxtaposed resilient third outer tube halves 51' heat-sealed to each other and each defining a semi-circular receiving space 52' , and a plurality of fourth foam members 53' disposed respectively in the receiving spaces 52' of the third outer tube halves 51'. Outer curved surfaces of the first outer tube halves 21 form the top face of the absorber body (100b) in this embodiment. Each of the third outer tube halves 51' is made of thermoplastic polyurethane, and is heat-sealed to and is staggered with respect to an adjacent one of the first outer tube halves 21 and an adjacent one of the second outer tube halves 31 in a top-to-bottom direction. Through such an arrangement, gaps among the first to third outer tube halves 21, 31, 51' can be minimized to thereby result in a denser structure of the entire shock-absorbing device of the present invention. As such, the supporting force and the buffering and shock-absorbing effects of the shock-absorbing device of the present invention can be enhanced.

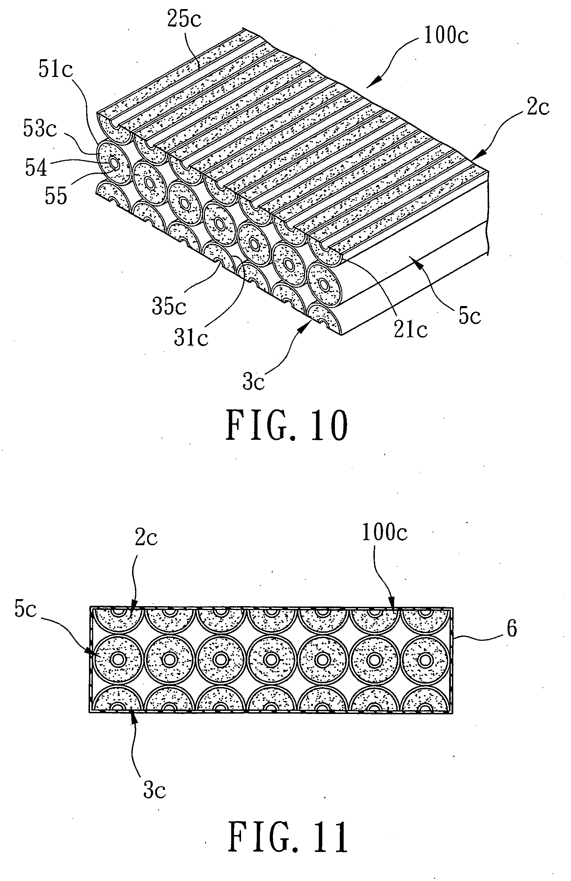

Referring to Fig. 10, a resilient shock-absorbing device according to the sixth preferred embodiment of the present invention is shown to be similar to the fourth preferred embodiment. However, in this embodiment, each of the third foam members (53c) has a central hole 54 that extends along the length thereof. The third absorber layer (5c) of the absorber body (100c) further includes a plurality of third inner tubes 54 disposed respectively in the central holes 54 of the third foam members (53c). Each of the third inner tubes 54 is made of thermoplastic polyurethane, and has a hardness ranging from 55 ShoreA to 85 ShoreD. Each of the first and second absorber layers (2c, 3c) is similar in construction to the first and second absorber layers 2', 3' (see Fig. 6) described in the second preferred embodiment of the shock-absorbing device of the present invention. The supporting effect of the entire shock-absorbing device of the present invention is strengthened through the presence of the relatively tough third inner tubes 55, such that when an external force is greater than the supporting forces of the first and second outer tube halves (21c, 31c) and the third tubes (51c), the first and second inner tube halves (25c, 35c) and the third inner tubes 55 can provide an additional supporting force against the external force, thereby enhancing the shock-absorbing and buffering effects of the resilient shock-absorbing device of the present invention.

Referring to Fig. 11, a resilient shock-absorbing device according to the seventh preferred embodiment of the present invention is shown to be similar to the sixth preferred embodiment. However, in this embodiment, the resilient shock-absorbing device further comprises a cover layer 6 that envelops the first to third absorber layers (2c, 3c, 5c) of the absorber body (100c). The cover layer 6 is similar in construction to the cover layer 4 (see Fig. 7) of the third preferred embodiment. Particularly, the cover layer 6 is made of thermoplastic polyurethane, has a hardness ranging from 55 ShoreA to 85 ShoreD, and can enhance stability and durability of the first to third absorber layers (2c, 3c, 5c). Further, the cover layer 6 is also a waterproof breathable (water-liquid impermeable and liquid-vapor permeable) film that can prevent the sweat of the user from seeping into the resilient shock-absorbing device of the present invention, and that can permit easy cleaning of the resilient shock-absorbing device of the present invention.

Other advantages of the present invention may be summarized as follows:
1. Since the thermoplastic polyurethane used in the resilient shock-absorbing device of the present invention is a recyclable material that may be reused and that can be decomposed, protection of the environment is achieved by using this material.
2. Since the resilient shock-absorbing device of the present invention is made of thermoplastic polyurethane, it can be easily bonded to other component parts by heating and pressing.
3. Under a definite temperature, the shape of the resilient shock-absorbing device of the present invention can be altered as desired, including the ability to be bent to form any curve.
4. The present invention does not rely on an inflatable body for buffering, so that there is no problem of damage or leakage.
5. The present invention is provided with the cover layer 4, 6 to facilitate effects of cleaning, waterproofing, and breathability.

## Claims

1. A resilient shock-absorbing device **characterized by**:
an absorber body (100, 100', 100a, 100b, 100c) having top and bottom faces and including first and second absorber layers (2, 2', 2c, 3, 3', 3c);
said first absorber layer (2, 2', 2c) including a plurality of juxtaposed resilient first outer tube halves (21, 21c) heat-sealed to each other, and a plurality of first foam members (23, 23') filled respectively in said first outer tube halves (21, 21c) and each having a surface exposed from a respective one of said first outer tube halves (21, 21c), said first absorber layer (2, 2', 2c) forming said top face;
said second absorber layer (3, 3', 3c) including a plurality of juxtaposed resilient second outer tube halves (31, 31c) heat-sealed to each other, and a plurality of second foam members (33, 33') filled respectively in said second outer tube halves (31, 31c) and each having a surface exposed from a respective one of said second outer tube halves (31, 31c), said second absorber layer (3, 3', 3c) forming said bottom face; and
each of said first and second outer tube halves (21, 21c, 31, 31c) being made of a thermoplastic elastic material, each of said first and second foam members (23, 23', 33, 33') having a segment-shaped cross section.

2. The resilient shock-absorbing device of Claim 1, **characterized in that** said thermoplastic elastic material is thermoplastic polyurethane, and each of said first and second outer tube halves (21, 21c, 31, 31c) has a hardness ranging from 55 ShoreA to 85 ShoreD.

3. The resilient shock-absorbing device of Claim 1, **characterized in that** each of said first outer tube halves (21) is heat-sealed to and is aligned with an adjacent one of said second outer tube halves (31) in a top-to-bottom direction.

4. The resilient shock-absorbing device of Claim 1, **characterized in that** each of said first outer tube halves (21) is heat-sealed to and is staggered with respect to an adjacent one of said second outer tube halves (31) in a top-to-bottom direction.

5. The resilient shock-absorbing device of Claim 1, **characterized in that** each of said first and second foam members (23, 23', 33, 33') has a density ranging from 0.2 g/cm³ to 0. 6 g/cm³, and is made of a material selected from the group consisting of thermoplastic polyurethane (TPU), thermoplastic elastomer (TPE), polyurethane (PU), natural rubber, silicone rubber, and a combination thereof.

6. The resilient shock-absorbing device of Claim 5, **characterized in that** each of said first foam members (23') has said surface thereof provided with a first indentation (24) that extends along the length thereof, and each of said second foammembers (33') has said surface thereof provided with a second indentation (34) that extends along the length thereof.

7. The resilient shock-absorbing device of Claim 6, **characterized in that** said first absorber layer (2') further includes a plurality of first inner tube halves (25) disposed respectively in said first indentations (24) of said first foam members (23'), said second absorber layer (3') further including a plurality of second inner tube halves (35) disposed respectively in said second indentations (34) of said second foammembers (33'), each of said first and second inner tube halves (25, 35) being made of thermoplastic polyurethane, and having a hardness ranging from 55 ShoreA to 85 ShoreD.

8. The resilient shock-absorbing device of Claim 1, further **characterized by** a cover layer (4, 6) that envelops said absorber body (100', 100c).

9. The resilient shock-absorbing device of Claim 8, **characterized in that** said cover layer (100', 100c) is made of thermoplastic polyurethane, and has a hardness ranging from 55 ShoreA to 85 ShoreD.

10. The resilient shock-absorbing device of Claim 1, **characterized in that** said absorber body (100a, 100b, 100c) further includes a third absorber layer (5, 5', 5c) connected between said first and second abs.orber layers (2, 2c, 3, 3c).

11. The resilient shock-absorbing device of Claim 10, **characterized in that** said third absorber layer (5, 5c) includes a plurality of juxtaposed resilient third outer tubes (51, 51c) heat-sealed to each other, each of said third outer tubes (51, 51c) receiving a third foam member (53, 53c) and being made of thermoplastic polyurethane, each of said third outer tubes (51, 51c) being heat-sealed to and being aligned with an adjacent one of said first outer tube halves (21, 21c) and an adjacent one of said second outer tube halves (31, 31c) in a top-to-bottom direction.

12. The resilient shock-absorbing device of Claim 10, **characterized in that** said third absorber layer (5') includes a plurality of juxtaposed resilient third outer tube halves (51') heat-sealed to each other, each of said third outer tube halves (51') receiving a fourth foam member (53') and being made of thermoplastic polyurethane, each of said third outer tube halves (51') being heat-sealed to and being staggered with respect to an adjacent one of said first outer tube halves (21) and an adjacent one of said second outer tube halves (31) in a top-to-bottom direction.

13. The resilient shock-absorbing device of Claim 11, **characterized in that** each of said third foam members (53c) has a central hole (54) that extends along the length thereof.

14. The resilient shock-absorbing device of Claim 13, **characterized in that** said third absorber layer (5c) further includes a plurality of third inner tubes (55) disposed respectively in said central holes (54) of said third foam members (53c), each of said third inner tubes (55) being made of thermoplastic polyurethane, and having a hardness ranging from 55 ShoreA to 85 ShoreD.

## Patentansprüche

1. Federnde stoßdämpfende Vorrichtung, **gekennzeichnet durch**:
einen Absorptionskörper (100, 100', 100a, 100b, 100c), der obere und untere Seiten aufweist und erste und zweite Absorptionsschichten (2, 2', 2c, 3, 3', 3c) umfasst;
wobei die erste Absorptionsschicht (2, 2', 2c) eine Vielzahl von miteinander heißversiegelten nebeneinanderliegenden federnden ersten äußeren Röhrenhälften (21, 21c) und eine Vielzahl von ersten Schaumstoffelementen (23, 23'), die jeweils in die ersten äußeren Röhrenhälften (21, 21c) eingefüllt sind und jeweils eine Oberfläche aufweisen, die von einer jeweiligen der ersten äußeren Röhrenhälften (21, 21c) aus freigelegt ist, umfasst, wobei die erste Absorptionsschicht (2, 2', 2c) die obere Seite bildet;
wobei die zweite Absorptionsschicht (3, 3', 3c) eine Vielzahl von miteinander heißversiegelten nebeneinanderliegenden federnden zweiten äußeren Röhrenhälften (31, 31c) und eine Vielzahl von zweiten Schaumstoffelementen (33, 33'), die jeweils in die zweiten äußeren Röhrenhälften (31, 31c) eingefüllt sind und jeweils eine Oberfläche aufweisen, die von einer jeweiligen der zweiten äußeren Röhrenhälften (31, 31c) aus freigelegt ist, umfasst, wobei die zweite Absorptionsschicht (3, 3', 3c) die untere Seite bildet; und
jede der ersten und zweiten äußeren Röhrenhälften (21, 21c, 31, 31c) aus einem thermoplastischen elastischen Material hergestellt ist, wobei jedes der ersten und zweiten Schaumstoffelemente (23, 23', 33, 33') einen kreisabschnittförmigen Querschnitt aufweist.

2. Federnde stoßdämpfende Vorrichtung nach Anspruch 1, **dadurch gekennzeichnet, dass** das thermoplastische elastische Material thermoplastisches Polyurethan ist, und jede der ersten und zweiten äußeren Röhrenhälften (21, 21c, 31, 31c) eine Härte aufweist, die von 55 Shore A bis 85 Shore D reicht.

3. Federnde stoßdämpfende Vorrichtung nach Anspruch 1, **dadurch gekennzeichnet, dass** jede der ersten äußeren Röhrenhälften (21) mit einer anliegenden Hälfte der zweiten äußeren Röhrenhälften (31) in einer Richtung von oben nach unten heißversiegelt und darauf ausgerichtet ist.

4. Federnde stoßdämpfende Vorrichtung nach Anspruch 1, **dadurch gekennzeichnet, dass** jede der ersten äußeren Röhrenhälften (21) mit einer anliegenden Hälfte der zweiten äußeren Röhrenhälften (31) in einer Richtung von oben nach unten heißversiegelt und im Verhältnis dazu versetzt ist.

5. Federnde stoßdämpfende Vorrichtung nach Anspruch 1, **dadurch gekennzeichnet, dass** jedes der ersten und zweiten Schaumstoffelemente (23, 23', 33, 33') eine Dichte aufweist, die von 0,2 g/cm³ bis 0,6 g/cm³ reicht, und aus einem Material hergestellt ist, das aus der Gruppe gewählt wird, die aus thermoplastischem Polyurethan (TPU), thermoplastischem Elastomer (TPE), Polyurethan (PU), Naturkautschuk, Silikonkautschuk und einer Kombination derselben ausgewählt wird.

6. Federnde stoßdämpfende Vorrichtung nach Anspruch 5, **dadurch gekennzeichnet, dass** die Oberfläche jedes der ersten Schaumstoffelemente (23') mit einer ersten Einkerbung (24) versehen ist, die sich über seine Länge erstreckt, und die Oberfläche jedes der zweiten Schaumstoffelemente (33') mit einer zweiten Einkerbung (34) versehen ist, die sich über seine Länge erstreckt.

7. Federnde stoßdämpfende Vorrichtung nach Anspruch 6, **dadurch gekennzeichnet, dass** die erste Absorptionsschicht (2') ferner eine Vielzahl erster innerer Röhrenhälften (25) umfasst, die jeweils in den ersten Einkerbungen (24) der ersten Schaumstoffelemente (23') angeordnet sind, wobei die zweite Absorptionsschicht (3') ferner eine Vielzahl von zweiten inneren Röhrenhälften (35) umfasst, die jeweils in den zweiten Einkerbungen (34) der zweiten Schaumstoffelemente (33') angeordnet sind, wobei jede der ersten und zweiten inneren Röhrenhälften (25, 35) aus thermoplastischem Polyurethan hergestellt ist, und eine Härte aufweist, die von 55 Shore A bis 85 Shore D reicht.

8. Federnde stoßdämpfende Vorrichtung nach Anspruch 1, ferner **gekennzeichnet durch** eine Abdeckschicht (4, 6), die den Absorptionskörper (100', 100c) umgibt.

9. Federnde stoßdämpfende Vorrichtung nach Anspruch 8, **dadurch gekennzeichnet, dass** die Abdeckschicht (100', 100c) aus thermoplastischem Polyurethan hergestellt ist, und eine Härte aufweist, die von 55 Shore A bis 85 Shore D reicht.

10. Federnde stoßdämpfende Vorrichtung nach Anspruch 1, **dadurch gekennzeichnet, dass** der Absorptionskörper (100a, 100b, 100c) ferner eine dritte Absorptionsschicht (5, 5', 5c) umfasst, die zwischen den ersten und zweiten Absorptionsschichten (2, 2c, 3, 3c) verbunden ist.

11. Federnde stoßdämpfende Vorrichtung nach Anspruch 10, **dadurch gekennzeichnet, dass** die dritte Absorptionsschicht (5, 5c) eine Vielzahl von miteinander heißversiegelten nebeneinanderliegenden federnden dritten äußeren Röhren (51, 51c) umfasst, wobei jede der dritten äußeren Röhren (51, 51c) ein drittes Schaumstoffelement (53, 53c) aufnimmt und aus thermoplastischem Polyurethan ausgebildet ist, wobei jede der dritten äußeren Röhren (51, 51c) mit einer anliegenden Hälfte der ersten äußeren Röhrenhälften (21, 21c) und einer anliegenden Hälfte der zweiten äußeren Röhrenhälften (31, 31c) in einer Richtung von oben nach unten heißversiegelt und darauf ausgerichtet ist.

12. Federnde stoßdämpfende Vorrichtung nach Anspruch 10, **dadurch gekennzeichnet, dass** die dritte Absorptionsschicht (5') eine Vielzahl von miteinander heißversiegelten nebeneinanderliegenden federnden dritten äußeren Röhrenhälften (51') umfasst, wobei jede der dritten äußeren Röhrenhälften (51') ein viertes Schaumstoffelement (53') aufnimmt und aus thermoplastischem Polyurethan hergestellt ist, wobei jede der dritten äußeren Röhren (51, 51c) mit einer anliegenden Hälfte der ersten äußeren Röhrenhälften (21, 21c) und einer anliegenden Hälfte der zweiten äußeren Röhrenhälften (31, 31c) in einer Richtung von oben nach unten heißversiegelt und im Verhältnis dazu versetzt ist.

13. Federnde stoßdämpfende Vorrichtung nach Anspruch 11, **dadurch gekennzeichnet, dass** jedes der dritten Schaumstoffelemente (53c) ein mittleres Loch (54) aufweist, das sich über seine Länge erstreckt.

14. Federnde stoßdämpfende Vorrichtung nach Anspruch 13, **dadurch gekennzeichnet, dass** die dritte Absorptionsschicht (5c) ferner eine Vielzahl von dritten inneren Röhren (55) umfasst, die jeweils in den mittleren Löchern (54) der dritten Schaumstoffelemente (53c) angeordnet sind, wobei jede der dritten inneren Röhren (55) aus thermoplastischem Polyurethan hergestellt ist, und eine Härte aufweist, die von 55 Shore A bis 85 Shore D reicht.

## Revendications

1. Dispositif antichoc résilient, **caractérisé par** :
un corps d'absorption (100, 100', 100a, 100b, 100c) présentant des faces supérieure et inférieure et comprenant des première et deuxième couches d'absorption (2, 2', 2c, 3, 3', 3c);
ladite première couche d'absorption (2, 2', 2c) comprenant une pluralité de premières moitiés de tube extérieures résilientes juxtaposées (21, 21c) thermosoudées ensemble, et une pluralité de premiers éléments en mousse (23, 23') remplissant respectivement lesdites premières moitiés de tube extérieures (21, 21c) et chacun ayant une surface exposée depuis une moitié respective desdites premières moitiés de tube extérieures (21, 21c), ladite première couche d'absorption (2, 2', 2c) formant ladite face supérieure ;
ladite deuxième couche d'absorption (3, 3', 3c) comprenant une pluralité de deuxièmes moitiés de tube extérieures résilientes juxtaposées (31, 31c) thermosoudées ensemble, et une pluralité de deuxièmes éléments en mousse (33, 33') remplissant respectivement lesdites deuxièmes moitiés de tube extérieures (31, 31c) et chacun ayant une surface exposée depuis une moitié respective desdites deuxièmes moitiés de tube extérieures (31, 31c), ladite deuxième couche d'absorption (3, 3', 3c) formant ladite face inférieure ; et
chacune desdites premières et deuxièmes moitiés de tube extérieures (21, 21e, 31, 31c) étant réalisée à partir d'un matériau élastique thermoplastique, chacun desdits premier et deuxième éléments en mousse (23, 23', 33, 33') ayant une section transversale en forme de segment de cercle.

2. Dispositif antichoc résilient selon la revendication 1, **caractérisé en ce que** ledit matériau élastique thermoplastique est du polyuréthane thermoplastique, et chacune desdites premières et deuxièmes moitiés de tube extérieures (21, 21c, 31, 31c) présente une dureté allant de 55 Shore A à 85 Shore D.

3. Dispositif antichoc résilient selon la revendication 1, **caractérisé en ce que** chacune desdites premières moitiés de tube extérieures (21) est thermosoudée à, et alignée sur une moitié adjacente desdites deuxièmes moitiés de tube extérieures (31) dans un sens de haut en bas.

4. Dispositif antichoc résilient selon la revendication 1, **caractérisé en ce que** chacune des premières moitiés de tube extérieures (21) est thermosoudée à, et est décalée en quinconce par rapport à une moitié adjacente desdites deuxièmes moitiés de tube extérieures (31) dans un sens de haut en bas.

5. Dispositif antichoc résilient selon la revendication 1, **caractérisé en ce que** chacun desdits premiers et deuxièmes éléments en mousse (23, 23', 33, 33') présente une densité allant de 0,2 g/cm³ à 0,6 g/cm³, et est réalisé à partir d'un matériau sélectionné dans le groupe composé du polyuréthane thermoplastique (TPU), de l'élastomère thermoplastique (TPE), du polyuréthane (PU), du caoutchouc naturel, du caoutchouc silicone et d'une combinaison de ceux-ci.

6. Dispositif antichoc résilient selon la revendication 5, **caractérisé en ce que** chacun desdits premiers éléments en mousse (23') présente ladite surface de celui-ci munie d'une première encoche (24) qui s'étend sur sa longueur, et chacun desdits deuxièmes éléments en mousse (33') présente ladite surface de celui-ci munie d'une deuxième encoche (34) qui s'étend sur sa longueur.

7. Dispositif antichoc résilient selon la revendication 6, **caractérisé en ce que** ladite première couche d'absorption (2') comprend en outre une pluralité de premières moitiés de tube intérieures (25) disposées respectivement dans lesdites premières encoches (24) desdits premiers éléments en mousse (23'), ladite deuxième couche d'absorption (3') comprenant en outre une pluralité de deuxièmes moitiés de tube intérieures (35) disposées respectivement dans lesdites deuxièmes encoches (34) desdits deuxièmes éléments en mousse (33'), chacune desdites premières et deuxièmes moitiés de tube intérieures (25, 35) étant réalisée en polyuréthane thermoplastique, et ayant une dureté allant de 55 Shore A à 85 Shore D.

8. Dispositif antichoc résilient selon la revendication 1, **caractérisé en outre par** une couche de recouvrement (4, 6) qui enveloppe ledit corps d'absorption (100', 100c).

9. Dispositif antichoc résilient selon la revendication 8, **caractérisé en ce que** ladite couche de recouvrement (100', 100c) est réalisée en polyuréthane thermoplastique, et présente une dureté allant de 55 Shore A à 85 Shore D.

10. Dispositif antichoc résilient selon la revendication 1, **caractérisé en ce que** ledit corps d'absorption (100a, 100b, 100c) comprend en outre une troisième couche d'absorption (5, 5', 5c) connectée entre lesdites premières et deuxièmes couches d'absorption (2, 2c, 3, 3c).

11. Dispositif antichoc résilient selon la revendication 10, **caractérisé en ce que** ladite troisième couche d'absorption (5, 5c) comprend une pluralité de troisièmes tubes extérieurs résilients juxtaposés (51, 51c) thermosoudés ensemble, chacun desdits troisièmes tubes extérieurs (51, 51c) recevant un troisième élément en mousse (53, 53c) et étant réalisé en polyuréthane thermoplastique, chacun desdits troisièmes tubes extérieurs (51, 51c) étant thermosoudé à, et étant aligné sur une moitié adjacente desdites premières moitiés de tube extérieures (21, 21c) et une moitié adjacente desdites deuxièmes moitiés de tube extérieures (31, 31c) dans un sens de haut en bas.

12. Dispositif antichoc résilient selon la revendication 10, **caractérisé en ce que** ladite troisième couche d'absorption (5') comprend une pluralité de troisièmes moitiés de tube extérieures résilientes juxtaposées (51'), thermosoudées ensemble, chacune desdites troisièmes moitiés de tube extérieures (51') recevant un quatrième élément en mousse (53') et étant réalisé en polyuréthane thermoplastique, chacune desdites troisièmes moitiés de tube extérieures (51') étant thermosoudée à, et étant décalée en quinconce par rapport à une moitié adjacente desdites premières moitiés de tube extérieures (21) et une moitié adjacente desdites deuxièmes moitiés de tube extérieures (31) dans un sens de haut en bas.

13. Dispositif antichoc résilient selon la revendication 11, **caractérisé en ce que** chacun desdits troisième éléments en mousse (53c) présente un trou central (54) qui s'étend sur sa longueur.

14. Dispositif antichoc résilient selon la revendication 13, **caractérisé en ce que** ladite troisième couche d'absorption (5c) comprend en outre une pluralité de troisièmes tubes intérieurs (55) respectivement disposés dans lesdits trous centraux (54) desdits troisième éléments en mousse (53c), chacun desdits troisièmes tubes intérieurs (55) étant réalisé en polyuréthane thermoplastique, et ayant une dureté allant de 55 Shore A à 85 Shore D.
